# EUROPEAN PATENT APPLICATION

(11) **EP 1 602 400 A1**
(43) Date of publication of application: **07.12.2005**
(21) Application number: 05011545.0
(22) Date of filing: 27.05.2005
(51) Int. Cl.: B01D 35/143

(54) **Indicator with anti-tampering circuit for signalling clogging of a filter**

(30) Priority: 01.06.2004 IT MI20040255 U
(71) Applicant: Planet Filters S.p.A., 46100 Mantova MN (IT)
(72) Inventor: Tengattini, Renato, 25030 Paratico BS (IT)
(74) Representative: Faraggiana, Vittorio

(57) **Abstract**

A clogged-filter signalling indicator (10) in a fluidic installation is equipped with an external electrical connector (12) to which leads an electrical circuit contained in the indicator and clogged-condition sensing means (13) which command the circuit to changeover from a first condition to a second condition upon sensing of a clogged condition. In the circuit there is an electrically controllable member (21) for subsequent command of the circuit between the two conditions. This permits verification of the connection of the indicator and the presence or not of tampering.

## Description

This invention relates to an improved clogged-filter signalling indicator.

In the prior art, differential clogging indicators with visual and electrical or only electrical signalling of the clogged condition of a filter with which they are associated are known. These indicators are generally used in oil-pressure circuits in which failure to replace the filtering element could cause damage to the machine on which it is installed. As known, a clogging indicator generally includes a membrane or other movable member subject to the pressure of the fluid passing through the filter and that, upon reaching a predetermined state of clogging of the filter, opens or closes an electrical contact connected to an appropriate signalling and/or control circuit. Said circuit generally stops operation of the machine to avoid damage.

Unfortunately, it has been noted that the filter is not always replaced promptly upon signalling by the indicator of clogging but it might happen that when the indicator signals clogging someone decides to place a jumper in parallel with the signalling contacts of the indicator or disconnect the wire or connector so as to eliminate the clog signal and be able to continue using the machine.

Although signalling of clogging is usually done with a certain advance just to avoid damage, continuing for a long time with the use of the machine after signalling of clogging could cause serious damage to the machine.

Especially, once the jumper is removed or the wire or connector is reconnected, it is no longer possible to prove that there has been tampering and in case of a machine under guarantee the damage falls onto the guiltless firm that produced the machine.

The general purpose of this invention is to remedy the above mentioned shortcomings by making available a clog sensor that would allow eliminating the possibility of easy tampering therewith.

In view of this purpose it was sought to provide in accordance with this invention a clogged-filter indicator in a fluidic installation equipped with an electrical connector to which leads an electrical circuit contained in the indicator and clogged-condition sensing means commanding said circuit to changeover from a first condition to a second condition upon sensing of a clogged condition and characterized in that in the circuit there is an electrically controllable member for further control of the circuit between the two conditions.

To clarify the explanation of the innovative principles of this invention and its advantages compared with the prior art there is described below with the aid of the annexed drawings a possible embodiment thereof by way of non-limiting example applying said principles. In the drawings:
FIG 1 shows a partially cross-sectioned diagrammatic view of a clogging indicator realized in accordance with the principles of this invention, and
FIG 2 shows an electrical diagram of the indicator of FIG 1.

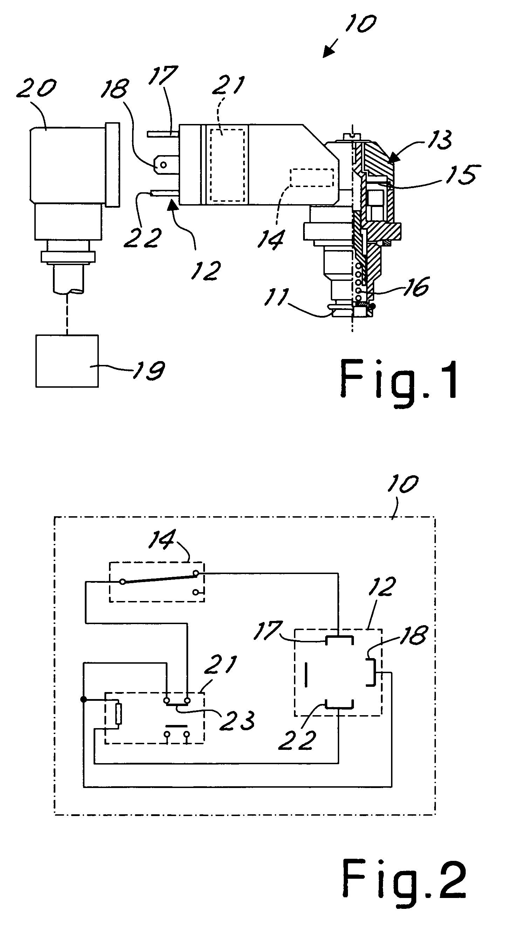

With reference to the figures, FIG 1 shows a clogging indicator designated as a whole by reference number 10 for use with a filter in a fluidic installation (not shown). The indicator includes a union 11 for connection with the hydraulic system and an external electrical connector 12 to which leads an electrical circuit contained in the indicator. The indicator could be fitted on a purposeful base 20 for connection with the control device 19 of the machine whose filter is to be monitored.

Means 13 inside the device 10 and for sensing of the clogged condition command the electrical circuit to changeover from a first condition to a second condition upon sensing of a clogged condition. In particular, the clog sensing means include a member sensitive to the set pressure to cause the electrical signalling contact 14 in the indicator to go off when the fluid pressure to the union 11 reaches a figure that has been preset as a symptom of excessive clogging of the associated filter.

The pressure sensor device could be realized in various ways as known and readily imaginable to those skilled in the art. For example, an elastic membrane 15 could be provided subject on one side to the fluid pressure and an adjustable load spring 16. Movement of the membrane or of the internal movable device causes release of the switch 14 which is realized for example as a 'Reed' contact or a magnetically operated microswitch.

The contact 14 is advantageously of the normally closed type and opens upon sensing of the predetermined clogged condition.

Again advantageously the condition of the electric circuit could be merely of closed circuit between two terminals 17, 18 of the connector 12 when there is no clogging and of open circuit between the same two terminals when the clogged condition is sensed.

In accordance with this invention, in the electric circuit of the indicator there is a member 21 electrically controllable from the outside to command the circuit between the two predetermined conditions subsequently. Control of this member takes place through a third terminal 22 located on the connector 12. Advantageously, the member 21 is fitted into a spacer arranged between the body of the indicator containing the clog sensors and the electrical connector.

In the preferred embodiment of which the circuit is shown in greater detail in FIG 2 the controllable member is a relay 21 with control coil connected between one of the two terminals 17, 18 and the third control terminal 22. The relay has a normally closed contact 23 connected in series with the signalling contact 14. In this manner, by applying an appropriate voltage from the outside to the control terminal 22 as regards the terminal 18, the relay causes opening of the circuit between the terminals 17 and 18 while simulating signalling of the clogged condition.

With the indicator described, the machine-control circuit (not shown because readily imaginable to those skilled in the art) could thus easily verify whether the indicator has been tampered with. Indeed, the tampering could be done for example by creation of a short circuit on the connector signalling terminals or by removal of the clogging indicator and its replacement with a jumper on the terminals of the connector 20.

With such tampering, there would be false indication of lack of clogging of the filters with resulting risk of damaging the associated hydraulic circuit. The appropriately instructed control circuit could however command changeover of the indicator to the clogged condition by means of the terminal 22. If the clogged condition continues to not be signalled it means that there has been malfunction of or tampering with the indicator and this could be promptly sensed before occurrence of a failure of the hydraulic circuit following an undetected clogging of the filter associated with the indicator.

It is now clear that the preset purposes have been achieved by making available an indicator capable of control of tampering and verification of the indicator connection.

Naturally the above description of an embodiment applying the innovative principles of this invention is given by way of non-limiting example of said principles within the scope of the exclusive right claimed here. For example, the conditions of the circuit that signal clogged and not-clogged could be more complicated than the mere opening or closing of the circuit as readily imaginable to those skilled in the art. The circuit could also be not only electromechanical but electronic. For example, the relay could be replaced entirely or partially with an appropriate solid-state circuit.

As known in the field, the clogged-condition sensor means could also be different from those described here. The sensor could detect loss of charge upstream or downstream of the filter.

Even the manner of use of the indicator could be different. For example, the control circuit 19 of a machine in which the indicator in accordance with this invention is installed could carry out either a cyclic control at predetermined intervals through the control terminal 22 or a control after a predetermined time from a clog signal and return to the non-clogged condition. Indeed, return to the non-clogged condition could be due to actual replacement or cleaning of the filter or to tampering in an attempt to make the machine operative immediately without first proceeding to cleaning or replacement of the filter.

## Claims

1. Clogged-filter indicator in a fluidic installation equipped with an electrical connector (12) to which leads an electrical circuit contained in the indicator and clogged-condition sensing means (13) which command said circuit to changeover from a first condition to a second condition upon sensing of a clogged condition and
**characterized in that** in the circuit there is an electrically controllable member (21) for subsequent control of the circuit between two conditions.

2. Indicator in accordance with claim 1 **characterized in that** the electrical connector (12) includes two terminals (17, 18) to which lead two ends of said electrical circuit and a third terminal (22) that controls said electrically controllable member.

3. Indicator in accordance with claim 2 **characterized in that** the controllable member is a relay (21) with a control circuit connected between one of said two terminals (17, 18) and said third terminal (22).

4. Indicator in accordance with claim 1 **characterized in that** the first condition is a closed-circuit condition and the second condition is open-circuit with said electrically controllable member being a relay (21) with contact (23) arranged in series with the electrical circuit.

5. Indicator in accordance with claim 2 **characterized in that** said contact (23) of the relay is a normally-closed contact in series with another normally closed contact (14) commanded to open by said clogged-condition sensing means (13).

6. Indicator in accordance with claim 1 **characterized in that** the clogged-condition sensing means (13) include a member (15) sensitive to the pressure applied to a hydraulic union (11) designed for connection with the fluidic circuit with the sensitive member being set to command changeover of the electric circuit from one condition to the other when the pressure on the union exceeds a predetermined threshold.

7. Indicator in accordance with claim 1 **characterized in that** the pressure-sensitive member is an internal movable device (15).

8. Indicator in accordance with claim 1 **characterized in that** the pressure-sensitive member is an elastic membrane (15).

9. Indicator in accordance with claim 1 **characterized in that** the member (21) is arranged in a spacer arranged between the body of the indicator containing the clogged-condition sensing means (13) and the electrical connector (12).
